# EUROPÄISCHE PATENTSCHRIFT

(11) **EP 2 402 213 B1**
(45) Veröffentlichungstag und Bekanntmachung des Hinweises auf die Patenterteilung: **24.08.2022**
(21) Anmeldenummer: 11166147.6
(22) Anmeldetag: 16.05.2011
(51) Int. Cl.: B60Q 1/08, A01B 76/00, B60Q 1/24

(54) **Anordnung zur Kontrolle der Arbeitsgerätebeleuchtung eines Arbeitsfahrzeugs**
Assembly for monitoring the work device lighting of a work vehicle
Agencement de contrôle de l'éclairage d'appareils de travail d'un véhicule de travail

(30) Priorität: 29.06.2010 DE 102010030649
(43) Veröffentlichungstag der Anmeldung: 04.01.2012
(73) Patentinhaber: Deere & Company, Moline, IL 61265 (US)
(72) Erfinder: von Mezynski, Christian, 67657, Kaiserslautern (DE)
(74) Vertreter: Holst, Sönke

(56) Entgegenhaltungen:
- EP-A1- 2 158 799
- DE-U1-202004 004 805
- US-A- 3 934 134
- US-A- 5 442 527

## Beschreibung

Die Erfindung betrifft eine Kombination aus einem Arbeitsfahrzeug, einem Arbeitsgerät und einer Anordnung zur Kontrolle der Arbeitsgerätebeleuchtung des Arbeitsfahrzeugs, mit welchem unterschiedliche Arbeitsgeräte wechselbar verbindbar sind, gemäß dem Oberbegriff des Anspruchs 1.

### Stand der Technik

Eine zum Anmeldezeitpunkt des vorliegenden Schutzrechts aktuelle Norm zur Datenübertragung und -anzeige in landwirtschaftlichen Fahrzeugen ist die ISO 11783. Nach dieser Norm gestaltete Bussysteme umfassen elektronische Kontrolleinheiten, die Aktoren eines Fahrzeugs oder daran angebaute Geräte ansteuern und/oder Messwerte von Sensoren erhalten. Eine oder mehrere zusammenwirkende Kontrolleinheiten werden als Arbeitsensemble (englisch: Working Set) bezeichnet. Die Kontrolleinheiten sind untereinander und mit einem so genannten virtuellen Terminal durch einen Daten-Bus (im Folgenden auch einfach als Bus bezeichnet) verbunden. Das virtuelle Terminal erlaubt eine Anzeige von gemessenen Arbeitsparametern und/oder ihrer Sollwerte und eine Eingabe von gewünschten Sollwerten für bestimmte Parameter durch einen Bediener und dient als Bedienerschnittstelle für die Kontrolleinheiten oder Arbeitsensembles.

Die ISO 11783 regelt in ihrem Teil 7 unter anderem eine Ansteuerung der Beleuchtung eines Traktors und der Beleuchtung eines am Traktor befestigten Arbeitsgeräts über den Bus. Jede Beleuchtungs-Kontrolleinheit des Traktors und des Arbeitsgeräts übersendet eine entsprechende Nachricht an die elektronische Steuereinheit (ECU) des Traktors, die wiederum die ausgewählten Beleuchtungselemente ein- und ausschaltet, z. B. Frontlichter, Fahrlichter, Fahrtrichtungsanzeiger, Bremslichter, Nebelscheinwerfer, Markierungsleuchten und Arbeitsleuchten des Traktors und/oder Arbeitsgeräts. Es findet jeweils ein Ein- und Ausschalten der Beleuchtung statt, aber kein Verstellen oder Ausrichten einer Beleuchtung, um das Arbeitsgerät optimal auszuleuchten.

Weiterhin kann die Kontrolleinheit des Arbeitsgeräts gemäß Teil 10 der ISO 11783 über den Bus Daten hinsichtlich physischer Größen des Arbeitsgeräts, wie die Arbeitsbreite und Arbeitstiefe übersenden. Diese Daten werden vornehmlich für Navigations- und Dokumentationszwecke benötigt.

In der EP 2 158 799 A1 wird eine landwirtschaftliche Arbeitsmaschine beschrieben, deren Beleuchtung abhängig von der jeweiligen Position eines Erntevorsatzes oder eines Pflugs einund ausgeschaltet wird.

Die DE 20 2004 004 805 U1 beschreibt einen Kran, dessen Beleuchtung mittels über einen Bus übertragener Daten auf das bewegte Objekt ausgerichtet wird.

### Aufgabe der Erfindung

Die Traktoren umfassen üblicherweise eine nach vorn und/oder hinten ausgerichtete Arbeitsgerätebeleuchtung, um das Arbeitsgerät bei Feldarbeiten in der Dämmerung oder Dunkelheit sehen und überwachen zu können. Bisher erfolgt die genaue Ausrichtung dieser Beleuchtung auf das Arbeitsgerät manuell durch den Fahrer des Traktors. Falls ein bestimmter Traktor nun mit einem anderen Arbeitsgerät betrieben werden soll, erweist sich die jeweils vorzunehmende Neu-Ausrichtung der Arbeitsgerätebeleuchtung als zeitaufwändig und fehlerträchtig.

Die der Erfindung zu Grunde liegende Aufgabe wird darin gesehen, eine Beleuchtungsanordnung für ein Arbeitsfahrzeug bereitzustellen, bei der eine Ausrichtung der Arbeitsgerätebeleuchtung auf ein jeweils mit dem Arbeitsfahrzeug verbundenes Arbeitsgerät erleichtert wird.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Anordnung zur Kontrolle der Arbeitsgerätebeleuchtung eines Arbeitsfahrzeugs umfasst eine Steuereinheit des Arbeitsfahrzeugs, die mit einer Arbeitsgerätebeleuchtungseinrichtung und einer Datenübertragungseinrichtung verbunden ist, sowie eine Kontrolleinheit des Arbeitsgeräts, die dem Arbeitsgerät zugeordnet und mit der Datenübertragungseinrichtung verbindbar oder verbunden ist. Die Steuereinheit des Arbeitsfahrgeräts kann über die Datenübertragungseinrichtung Daten hinsichtlich der Arbeitsbreite und/oder Arbeitshöhe und/oder Position des Arbeitsgeräts gegenüber dem Arbeitsfahrzeug übersenden. Die Steuereinheit ist mit einem Aktor zur Verstellung der Ausrichtung und/oder des Öffnungswinkels des Leuchtkegels der Arbeitsgerätebeleuchtungseinrichtung verbunden und steuert den Aktor im Betrieb abhängig von den über die Datenübertragungseinrichtung übertragenen Daten hinsichtlich der Arbeitsbreite und/oder Arbeitshöhe und/oder Position des Arbeitsgeräts gegenüber dem Arbeitsfahrzeug an, sodass die Arbeitsgerätebeleuchtungseinrichtung optimal auf das Arbeitsgerät ausgerichtet und letzteres selbsttätig anhand seiner jeweiligen physischen Größen optimal ausgeleuchtet werden kann.

Auf diese Weise erübrigt sich bei einem Wechsel des Arbeitsgeräts eine manuelle Verstellung der Arbeitsgerätebeleuchtungseinrichtung, was dem Fahrer des Arbeitsfahrzeugs die Einstellung der Arbeitsgerätebeleuchtung erleichtert.

Der Aktor kann zur Verstellung der horizontalen und/oder vertikalen Ausrichtung der Arbeitsgerätebeleuchtung eingerichtet sein. Außerdem kann die Steuereinheit eine oder mehrere Arbeitsgerätebeleuchtungen unter unterschiedlichen Arbeitsgerätebeleuchtungen auswählen, beispielsweise abhängig davon, ob das Arbeitsgerät vorn oder hinten am Arbeitsfahrzeug angebracht ist, oder bei größeren Arbeitsbreiten zusätzlich weiter nach außen gerichtete Arbeitsgerätebeleuchtungen einschalten.

Weiterhin kann die Kontrolleinheit des Arbeitsgeräts über die Datenübertragungseinrichtung Daten hinsichtlich des Anbringungspunkts des Arbeitsgeräts am Arbeitsfahrzeug übertragen, beispielsweise ob es vorn oder hinten oder oben oder unten an einer Kupplungseinrichtung am Arbeitsfahrzeug angebracht ist. Die Steuereinheit steuert den Aktor anhand dieser Daten an, um die Arbeitsgerätebeleuchtungseinrichtung optimal auf das Arbeitsgerät auszurichten.

Die Arbeitsgerätebeleuchtungseinrichtung kann am Arbeitsfahrzeug und/oder am Arbeitsgerät angebracht sein.

Die erfindungsgemäße Anordnung zur Kontrolle der Arbeitsgerätebeleuchtung eines Arbeitsfahrzeugs eignet sich für beliebige landwirtschaftliche Fahrzeuge und auch andere Nutzund Arbeitsfahrzeuge und insbesondere für selbstfahrende Traktoren und Erntemaschinen.

### Ausführungsbeispiel

In den Zeichnungen ist ein nachfolgend näher beschriebenes Ausführungsbeispiel der Erfindung dargestellt. Es zeigt:

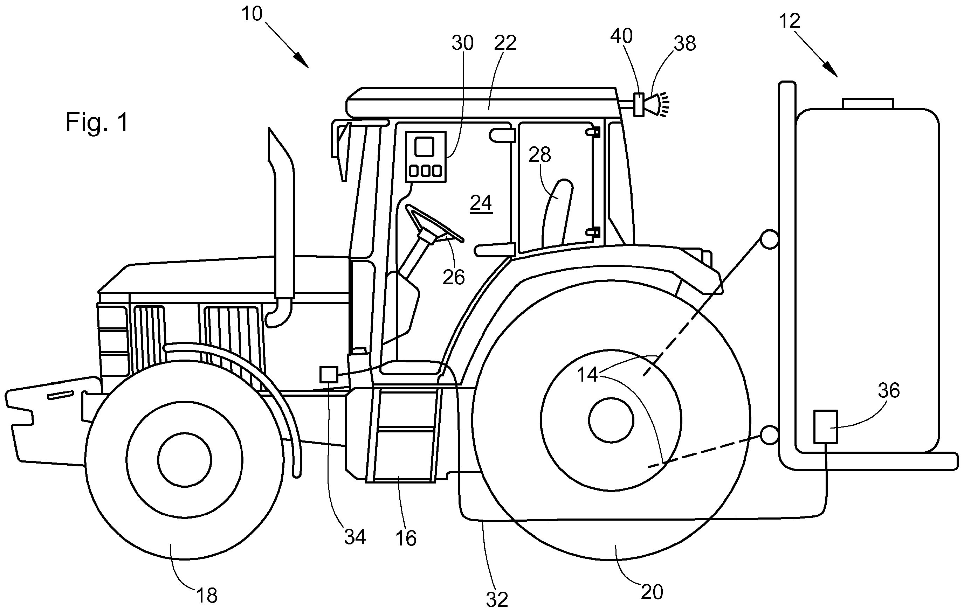

- Fig. 1: eine seitliche Ansicht eines Arbeitsfahrzeugs mit einem Arbeitsgerät und einer erfindungsgemäßen Anordnung zur Kontrolle der Arbeitsgerätebeleuchtung des Arbeitsfahrzeugs.

Die Figur 1 zeigt eine seitliche Ansicht eines selbstfahrenden Arbeitsfahrzeugs 10 in Form eines landwirtschaftlichen Traktors und eines an einem Dreipunktgestänge 14 des Fahrzeugs 10 angebauten Arbeitsgeräts 12 in Form einer Feldspritze. Das Arbeitsfahrzeug 10 baut sich auf einem tragenden Rahmen 16 auf, der sich auf lenkbaren Vorderrädern 18 und antreibbaren Hinterrädern 20 abstützt und eine Kabine 22 trägt, in der sich ein Bedienerarbeitsplatz 24 befindet. Der Bedienerarbeitsplatz 24 umfasst ein Lenkrad 26, einen Sitz 28, Pedale (nicht gezeigt) und ein virtuelles Terminal 30.

Das virtuelle Terminal 30 ist mit einer Datenübertragungseinrichtung 32 verbunden, die in der dargestellten Ausführungsform ein serieller Datenbus ist. Mit der Datenübertragungseinrichtung 32 ist weiterhin eine elektronische Steuereinheit 34 des Arbeitsfahrzeugs 10 und eine Kontrolleinheit 36 des Arbeitsgeräts 12 verbunden. Die Steuereinheit 34, die Kontrolleinheit 36 und das virtuelle Terminal 30 tauschen während des Betriebs des Arbeitsfahrzeugs 10 über die Datenübertragungseinrichtung 32 Botschaften untereinander aus. In der Regel sind weitere Kontrolleinheiten (nicht gezeigt) an der Datenübertragungseinrichtung angeschlossen, die zu so genannten Arbeitsensembles (englisch: Working Sets) zusammengefasst sein können, die gemeinsam mit dem virtuellen Terminal 30 und ggf. anderen Kontrolleinheiten oder Arbeitsensembles über die Datenübertragungseinrichtung 32 kommunizieren. Das hier verwendete Protokoll entspricht vorzugsweise der ISO 11783.

Die Steuereinheit 34 des Arbeitsfahrzeugs 10 kontrolliert (ggf. unter anderem) die Beleuchtung des Arbeitsfahrzeugs 10, die beispielsweise vordere und hintere Fahrtrichtungsanzeiger (nicht gezeigt), vordere und hintere Fahrleuchten (Stand-, Abblend- und Fernlicht, nicht gezeigt), untere vordere und hintere Arbeitsleuchten zur Beleuchtung des Felds beim Arbeitsbetrieb (nicht gezeigt), obere vordere und hintere Arbeitsleuchten zur Beleuchtung des Felds beim Arbeitsbetrieb, die am Dach der Kabine 22 angebracht sein können (nicht gezeigt) und/oder eine oder mehrere Arbeitsgerätebeleuchtungseinrichtungen 38 umfasst. Die Arbeitsgerätebeleuchtungseinrichtung 38 ist in der dargestellten Ausführungsform am Dach der Kabine 22 angebracht, könnte aber an einer beliebigen anderen Stelle des Arbeitsfahrzeugs 10 befestigt sein. Es sind in der Regel mehrere Arbeitsgerätebeleuchtungseinrichtungen 38 am Dach der Kabine 22 montiert. Außerdem kontrolliert die Steuereinheit 34 des Arbeitsfahrzeugs 10 Beleuchtungseinrichtungen des Arbeitsgeräts (z. B. Positionslichter, Fahrtrichtungsanzeiger, Lichter zur Beleuchtung des Felds, alle nicht gezeigt).Die Steuereinheit 34 kann über den Bus 32 oder über eine separate Leitung mit der oder den Arbeitsgerätebeleuchtungseinrichtung(en) 38 verbunden sein.

Die Ansteuerung der Steuereinheit 34 des Arbeitsfahrzeugs 10 und damit die Kontrolle der Beleuchtung des Arbeitsfahrzeugs 10 und des Arbeitsgeräts 12 erfolgt insbesondere im Straßenfahrbetrieb in an sich bekannter Weise abhängig von Bedienereingaben. Im Feldarbeitsbetrieb erhält die Steuereinheit 34 des Arbeitsfahrzeugs 10 Daten von der Kontrolleinheit 36 des Arbeitsgeräts 12, die Informationen hinsichtlich der Arbeitsbreite und/oder Arbeitshöhe und/oder Position des Arbeitsgeräts 12 gegenüber dem Arbeitsfahrzeug 10 enthalten. Hier wären beispielsweise folgende Daten zu nennen:
Richtung der Vorwärtsachse des Arbeitsgeräts 12, Richtung der horizontalen Querachse des Arbeitsgeräts 12, Richtung der vertikalen Achse des Arbeitsgeräts 12, die Lage des Referenzpunkts des Arbeitsfahrzeugs 10, die Lage des Kopplungspunkts des Arbeitsgeräts 12 am Arbeitsfahrzeug 10, die Lage des Referenzpunkts des Arbeitsgeräts 12, die Lage des Referenzpunkts von Arbeitselementen des Arbeitsgeräts 12, die Lage des Referenzpunkts eines Positionsbestimmungssystems (nicht gezeigt), das sich am Arbeitsfahrzeug 10 oder am Anbaugerät 12 befinden kann, der Versatz zwischen der Lage des Referenzpunkts des Positionsbestimmungssystems und der Lage des Referenzpunkts des Arbeitsfahrzeugs 10 (in drei Dimensionen), der Versatz zwischen der Lage des Referenzpunkts des Arbeitsfahrzeugs 10 und der Lage des Kopplungspunkts des Arbeitsgeräts 12 am Arbeitsfahrzeug 10 (in drei Dimensionen), die Arbeitsbreite des Arbeitsgeräts 12 und/oder von Elementen des Arbeitsgeräts 12 und/oder der Versatz zwischen der Lage des Referenzpunkts des Arbeitsgeräts 12 und der Lage des Referenzpunkts von Arbeitselementen des Arbeitsgeräts 12 (zumindest in Vorwärtsrichtung und vertikaler Richtung).

Die genannten Daten werden im Rahmen des ISO 11783-Protokolls (vgl. deren Teil 10) zu Navigationszwecken über die Datenübertragungseinrichtung 32 übertragen, dessen Offenbarung durch Verweis in die vorliegenden Unterlagen aufgenommen wird. Dazu umfasst das Arbeitsfahrzeug eine oder mehrere Antennen zum Empfang von Signalen eines satellitenbasierten Positionsbestimmungssystems und nutzt geeignete der erwähnten Daten für die Wegplanung des Arbeitsfahrzeugs 10 und/oder zur Dokumentation des zurückgelegten Weges und/oder zur Navigation des Arbeitsfahrzeugs 10, insbesondere um zu erreichen, dass ein Referenzpunkt am Arbeitsgerät 12 entlang eines Sollwegs bewegt wird.

Die Steuereinheit 34 des Arbeitsfahrzeugs 10 leitet aus einzelnen oder mehreren der erwähnten Daten Steuersignale für einen Aktor 40 ab, der zur vertikalen und/oder horizontalen Verstellung der Arbeitsgerätebeleuchtungseinrichtung 38 dient. Außerdem kann ein weiterer Aktor (nicht gezeigt) mit der Steuereinheit 34 verbunden sein, der den Öffnungswinkel des Lichtkegels der Arbeitsgerätebeleuchtungseinrichtung 38 verstellt. Auf diese Weise kontrolliert die Steuereinheit 34 die Ausrichtung und/oder die Größe des Lichtkegels der Arbeitsgerätebeleuchtungseinrichtung 38 und richtet ihn optimal auf das jeweilige Arbeitsgerät 12 aus. Die Steuereinheit 34 kann über den Bus 32 oder eine separate Leitung mit dem oder den Aktor(en) 40 verbunden sein.

Das in der Figur 1 gezeigte Arbeitsgerät 12 in Form einer angebauten Feldspritze hat beispielsweise eine recht große Arbeitsbreite, sodass die Steuereinheit 34 den Lichtkegel der Arbeitsgerätebeleuchtungseinrichtung 38 relativ breit aufweitet und weit nach außen richtet. Wird das Arbeitsgerät 12 hingegen beispielsweise durch einen Pflug oder ein Bodenbearbeitungsgerät (nicht gezeigt) ersetzt, die eine relativ geringe Arbeitsbreite haben, werden deren Kontrolleinheiten die kleineren Arbeitsbreiten an die Steuereinheit 34 weiterleiten und diese wird die Arbeitsgerätebeleuchtungseinrichtung 38 mittels des Aktors 40 auf diese kleineren Arbeitsbreiten ausrichten, die beispielsweise im Falle eines Pfluges auch unsymmetrisch zur Längsmittelebene des Arbeitsfahrzeugs 10 sein kann. Somit erübrigt sich nach dem Wechsel des Arbeitsgeräts 12 eine manuelle Neuausrichtung der Arbeitsgerätebeleuchtungseinrichtung 38.

## Patentansprüche

1. Kombination aus einem Arbeitsfahrzeug (10), einem Arbeitsgerät (12) und einer Anordnung zur Kontrolle der Arbeitsgerätebeleuchtung (38) des Arbeitsfahrzeugs (10), mit welchem unterschiedliche Arbeitsgeräte (12) wechselbar verbindbar sind, wobei die Anordnung zur Kontrolle der Arbeitsgerätebeleuchtung (38) des Arbeitsfahrzeugs (10) folgendes umfasst:
eine Steuereinheit (34) des Arbeitsfahrzeugs (10), die mit der Arbeitsgerätebeleuchtungseinrichtung (38) und einer Datenübertragungseinrichtung (32) verbunden ist, und
eine Kontrolleinheit (36) eines jeweils mit dem Arbeitsfahrzeug (10) verbundenen Arbeitsgeräts (12), die dem Arbeitsgerät (12) zugeordnet und mit der Datenübertragungseinrichtung (32) verbunden und konfiguriert ist, über die Datenübertragungseinrichtung (32) Daten an die Steuereinheit (34) zu übersenden, welche ihrerseits konfiguriert ist, anhand der empfangenen Daten die Arbeitsgerätebeleuchtungseinrichtung (38) anzusteuern,
**dadurch gekennzeichnet, dass** die Kontrolleinheit (36) konfiguriert ist, der Steuereinheit (34) Daten hinsichtlich der Arbeitsbreite und/oder Arbeitshöhe und/oder Position des Arbeitsgeräts (12) gegenüber dem Arbeitsfahrzeug (10) zu übersenden, die zur Wegplanung des Arbeitsfahrzeugs (10) und/oder zur Navigation des Arbeitsfahrzeugs (10) im Sinne einer Bewegung eines Referenzpunkts am Arbeitsgerät (12) entlang eines Sollwegs und/oder zur Dokumentation des zurückgelegten Weges geeignet sind,
und dass die Steuereinheit (34) mit einem Aktor (40) zur Verstellung der Ausrichtung und/oder des Öffnungswinkels des Leuchtkegels der Arbeitsgerätebeleuchtungseinrichtung (40) verbunden und betreibbar ist, den Aktor (40) abhängig von den über die Datenübertragungseinrichtung (32) übertragenen Daten hinsichtlich der Arbeitsbreite und/oder Arbeitshöhe und/oder Position des Arbeitsgeräts (12) gegenüber dem Arbeitsfahrzeug (10) anzusteuern.

2. Kombination nach Anspruch 1, **dadurch gekennzeichnet, dass** der Aktor (40) zur Verstellung der horizontalen und/oder vertikalen Ausrichtung der Arbeitsgerätebeleuchtung (38) eingerichtet ist.

3. Kombination nach Anspruch 1 oder 2, **dadurch gekennzeichnet, dass** die Steuereinheit (34) zur Auswahl einer Arbeitsgerätebeleuchtung (38) unter mehreren Arbeitsgerätebeleuchtungen (38) eingerichtet ist.

4. Kombination nach einem der Ansprüche 1 bis 3, **dadurch gekennzeichnet, dass** die Kontrolleinheit (36) des Arbeitsgeräts (12) betreibbar ist, über die Datenübertragungseinrichtung (32) Daten hinsichtlich des Anbringungspunkts des Arbeitsgeräts (12) am Arbeitsfahrzeug (10) zu übertragen, und dass die Steuereinheit (34) betreibbar ist, den Aktor (40) anhand der Daten hinsichtlich des Anbringungspunkts des Arbeitsgeräts (12) am Arbeitsfahrzeug (10) anzusteuern.

5. Kombination nach einem der Ansprüche 1 bis 4, **dadurch gekennzeichnet, dass** die Arbeitsgerätebeleuchtungseinrichtung (38) am Arbeitsfahrzeug (10) angebracht ist.

6. Kombination nach einem der Ansprüche 1 bis 5, **dadurch gekennzeichnet, dass** das Arbeitsfahrzeug (10) eine oder mehrere Antennen zum Empfang von Signalen eines satellitenbasierten Positionsbestimmungssystems aufweist und die Steuereinheit (34) konfiguriert ist, die von der Kontrolleinheit (36) erhaltenen Daten hinsichtlich der Arbeitsbreite und/oder Arbeitshöhe und/oder Position des Arbeitsgeräts (12) gegenüber dem Arbeitsfahrzeug (10) für die Wegplanung des Arbeitsfahrzeugs (10) und/oder zur Navigation des Arbeitsfahrzeugs (10) im Sinne einer Bewegung eines Referenzpunkts am Arbeitsgerät (12) entlang eines Sollwegs und/oder zur Dokumentation des zurückgelegten Weges zu nutzen.

## Claims

1. Combination comprising a working vehicle (10), a work implement (12) and an arrangement for monitoring the work implement lighting means (38) of the working vehicle (10), to which working vehicle different work implements (12) can be exchangeably connected, wherein the arrangement for monitoring the work implement lighting means (38) of the working vehicle (10) comprises the following:
a control unit (34) of the working vehicle (10), which control unit is connected to the work implement lighting device (38) and a data transmission device (32), and
a monitoring unit (36) of a work implement (12) respectively connected to the working vehicle (10), which monitoring unit is associated with the work implement (12) and is connected to the data transmission device (32) and is designed to transmit data to the control unit (34) via the data transmission device (32), which control unit for its part is designed to actuate the work implement lighting device (38) on the basis of the received data,
**characterized in that** the monitoring unit (36) is designed to transmit to the control unit (34) data regarding the working width and/or working height and/or position of the work implement (12) with respect to the working vehicle (10), which data is suitable for route planning for the working vehicle (10) and/or for navigating the working vehicle (10) in the sense of a movement of a reference point on the work implement (12) along a target path and/or for recording the path covered,
and **in that** the control unit (34) is connected to an actuator (40) for adjusting the orientation and/or the opening angle of the cone of light of the work implement lighting device (40) and can be operated to actuate the actuator (40) depending on the data regarding the working width and/or working height and/or position of the work implement (12) with respect to the working vehicle (10) transmitted via the data transmission device (32).

2. Combination according to Claim 1, **characterized in that** the actuator (40) is designed for adjusting the horizontal and/or vertical orientation of the work implement lighting means (38).

3. Combination according to Claim 1 or 2, **characterized in that** the control unit (34) is designed for selecting one work implement lighting means (38) from amongst several work implement lighting means (38).

4. Combination according to one of Claims 1 to 3, **characterized in that** the monitoring unit (36) of the work implement (12) can be operated to transmit data regarding the attachment point of the work implement (12) to the working vehicle (10) via the data transmission device (32), and **in that** the control unit (34) can be operated to actuate the actuator (40) on the basis of the data regarding the attachment point of the work implement (12) to the working vehicle (10).

5. Combination according to one of Claims 1 to 4, **characterized in that** work implement lighting device (38) is attached to the working vehicle (10).

6. Combination according to one of Claims 1 to 5, **characterized in that** the working vehicle (10) has one or more antennas for receiving signals from a satellitebased position-determining system and the control unit (34) is designed to use the data regarding the working width and/or working height and/or position of the work implement (12) with respect to the working vehicle (10) received by the monitoring unit (36) for route planning for the working vehicle (10) and/or for navigating the working vehicle (10) in the sense of a movement of a reference point on the work implement (12) along a target path and/or for recording the path covered.

## Revendications

1. Combinaison composée d'un véhicule de travail (10), d'un outil de travail (12) et d'un agencement servant à contrôler l'éclairage d'outil de travail (38) du véhicule de travail (10) auquel différents outils de travail (12) peuvent être reliés de manière échangeable, l'agencement servant à contrôler l'éclairage d'outil de travail (38) du véhicule de travail (10) comprenant ce qui suit :
une unité de commande (34) du véhicule de travail (10) qui est reliée au dispositif d'éclairage d'outil de travail (38) et à un dispositif de transmission de données (32), et
une unité de contrôle (36) d'un outil de travail (12) respectivement relié au véhicule de travail (10), qui est associée à l'outil de travail (12) et reliée au dispositif de transmission de données (32), et qui est configurée pour transmettre par l'intermédiaire du dispositif de transmission de données (32) des données à l'unité de commande (34) qui est à son tour configurée pour piloter le dispositif d'éclairage d'outil de travail (38) à l'aide des données reçues,
**caractérisée en ce que** l'unité de contrôle (36) est configurée pour transmettre à l'unité de commande (34) des données concernant la largeur de travail et/ou la hauteur de travail et/ou la position de l'outil de travail (12) par rapport au véhicule de travail (10) qui sont adaptées à la planification de trajet du véhicule de travail (10) et/ou à la navigation du véhicule de travail (10) dans le sens d'un déplacement d'un point de référence sur l'outil de travail (12) le long d'un trajet de consigne et/ou à la documentation du trajet parcouru,
et **en ce que** l'unité de commande (34) est reliée à un actionneur (40) servant à régler l'orientation et/ou l'angle d'ouverture du cône lumineux du dispositif d'éclairage d'outil de travail (40), et peut fonctionner pour piloter l'actionneur (40) en fonction des données transmises par l'intermédiaire du dispositif de transmission de données (32) concernant la largeur de travail et/ou la hauteur de travail et/ou la position de l'outil de travail (12) par rapport au véhicule de travail (10).

2. Combinaison selon la revendication 1, **caractérisée en ce que** l'actionneur (40) est conçu pour régler l'orientation horizontale et/ou verticale de l'éclairage d'outil de travail (38).

3. Combinaison selon la revendication 1 ou 2, **caractérisée en ce que** l'unité de commande (34) est conçue pour sélectionner un éclairage d'outil de travail (38) parmi plusieurs éclairages d'outil de travail (38).

4. Combinaison selon l'une quelconque des revendications 1 à 3, **caractérisée en ce que** l'unité de contrôle (36) de l'outil de travail (12) peut fonctionner pour transmettre par l'intermédiaire du dispositif de transmission de données (32) des données concernant le point de fixation de l'outil de travail (12) sur le véhicule de travail (10), et **en ce que** l'unité de commande (34) peut fonctionner pour piloter l'actionneur (40) à l'aide des données concernant le point de fixation de l'outil de travail (12) sur le véhicule de travail (10).

5. Combinaison selon l'une quelconque des revendications 1 à 4, **caractérisée en ce que** le dispositif d'éclairage d'outil de travail (38) est fixé au véhicule de travail (10).

6. Combinaison selon l'une quelconque des revendications 1 à 5, **caractérisée en ce que** le véhicule de travail (10) présente une ou plusieurs antennes servant à recevoir des signaux d'un système de positionnement à base de satellites, et l'unité de commande (34) est configurée pour exploiter les données obtenues de l'unité de contrôle (36) concernant la largeur de travail et/ou la hauteur de travail et/ou la position de l'outil de travail (12) par rapport au véhicule de travail (10) pour la planification de trajet du véhicule de travail (10) et/ou pour la navigation du véhicule de travail (10) dans le sens d'un déplacement d'un point de référence sur l'outil de travail (12) le long d'un trajet de consigne et/ou pour la documentation du chemin parcouru.
